(19) Europäisches Patentamt
European Patent Office
Office européen des brevets

(11) **EP 2 033 014 B1**

(12) **EUROPÄISCHE PATENTSCHRIFT**

(45) Veröffentlichungstag und Bekanntmachung des Hinweises auf die Patenterteilung:
**25.04.2012 Patentblatt 2012/17**

(21) Anmeldenummer: **07764779.0**

(22) Anmeldetag: **22.06.2007**

(51) Int Cl.:
**G01S 7/03** *(2006.01)*　　**G01S 7/02** *(2006.01)*
**G01S 13/95** *(2006.01)*　**G01S 7/282** *(2006.01)*
**H01Q 21/24** *(2006.01)*

(86) Internationale Anmeldenummer:
**PCT/EP2007/005507**

(87) Internationale Veröffentlichungsnummer:
**WO 2007/147610 (27.12.2007 Gazette 2007/52)**

(54) **P0LARISATIONSM0DULIERTER SENDER FÜR EIN WETTERRADAR**

POLARIZATION-MODULATED TRANSMITTER FOR A WEATHER RADAR

ÉMETTEUR MODULÉ EN POLARISATION POUR RADAR MÉTÉOROLOGIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.06.2006 DE 102006029317**

(43) Veröffentlichungstag der Anmeldung:
**11.03.2009 Patentblatt 2009/11**

(73) Patentinhaber: **Selex Systems Integration GmbH**
**41429 Neuss (DE)**

(72) Erfinder: **GEKAT, Frank**
**51503 Rösrath (DE)**

(74) Vertreter: **Sparing Röhl Henseler**
**Postfach 14 04 43**
**40074 Düsseldorf (DE)**

(56) Entgegenhaltungen:
**EP-A2- 0 543 509　　EP-A2- 0 703 464**
**US-A- 2 273 161　　US-A- 3 478 362**
**US-A- 3 500 460　　US-A- 4 323 898**
**US-A- 5 344 099　　US-A- 6 121 920**
**US-A1- 2004 056 791**

• **ZAHRAI A ET AL: "Implementation of polarimetric capability for the WSR-88D (NEXRAD) radar" AEROSPACE AND ELECTRONICS CONFERENCE, 1997. NAECON 1997., PROCEEDINGS OF THE IEEE 1997 NATIONAL DAYTON, OH, USA 14-17 JULY 1997, NEW YORK, NY, USA,IEEE, US, Bd. 1, 14. Juli 1997 (1997-07-14), Seiten 346-352, XP010242843 ISBN: 0-7803-3725-5 in der Anmeldung erwähnt**

**Beschreibung**

Die Erfindung betrifft einen polarisätionsmodulierten Sender eines Wetterradars, nach dem Oberbegriff des Anspruchs 1.

Bei der Erfassung von Wetterdaten werden Wetterradars zur Wetterbeobachtung beispielsweise in der Nähe von Flughäfen eingesetzt. Die Wetterradars strahlen elektromagnetische Wellen ab und empfangen die u.a. an Niederschlagsteilchen gestreuten elektromagnetischen Wellen wieder, um diese auszuwerten. Beispielsweise werden elektromagnetische Wellen an größeren Regentropfen, aufgrund ihrer ovalen Form so gestreut, daß die horizontale Feldkomponente stärker als die vertikale Feldkomponente reflektiert wird. Viele Wetterradars strahlen eine elektromagnetische Welle ab, die eine einzige Feldkomponente aufweist, d.h. die elektromagnetische Welle ist "einfach" linear polarisiert. Um diesbezüglich für die Auswertung eine geeignete elektromagnetische Welle auszustrahlen, wird diese meist horizontal polarisiert.

Es hat sich jedoch gezeigt, daß "einfach" linear polarisierte Wetterradare erhebliche Nachteile aufweisen. Die Meßgenauigkeit der Regenrate ist für viele Anwendungen nicht ausreichend. Die Dämpfung, der die Welle bei ihrer Ausbreitung durch Regen ausgesetzt ist, kann bei der Berechnung der Regenrate nicht berücksichtigt werden. Die Klassifizierung der Niederschlagsteilchen ist nicht möglich.

Um die Meßgenauigkeit der Regenrate zu erhöhen, um die Dämpfung der Welle durch den Niederschlag zu erfassen und um eine Klassifizierung der Niederschlagsteilchen beispielsweise anhand der Teilchengrößeverteilung vornehmen zu können, werden "polarimetrische" Wetterradars verwendet, die elektromagnetische Wellen in zwei orthogonal zueinander polarisierten Feldkomponenten abstrahlen. Zur Auswertung wird der zurückgestreute, empfangene Puls in die beiden Feldkomponenten zerlegt und jeweils einem Empfänger zugeführt.

Zur Abstrahlung der zwei Feldkomponenten des Pulses sind im wesentlichen zwei unterschiedliche Methoden gebräuchlich. Man unterscheidet zwischen simultaner Polarisation und Polarisationsumschaltung.

Bei der simultanen (dualen) Polarisation enthält jeder abgestrahlte Puls beide Feldkomponenten, die orthogonal zueinander polarisiert sind. Der von der Antenne abgestrahlte Puls wird von einem Sender bereitgestellt, dessen Leistung auf zwei Kanäle, einen für jede Feldkomponente, aufgeteilt wird.

Durch die Aufteilung der Sendeleistung des Senders auf zwei Kanäle bei der simultanen Polarisation halbiert sich die für jeden der beiden Kanäle verfügbare Sendeleistung. Zudem kann die lineare Depolarisation des empfangenen Signals nicht gemessen werden, da dies voraussetzt, daß ein linear polarisiertes Signal abgestrahlt und die orthogonal zueinander polarisierten Feldkomponenten gemessen werden. Dies ist bei der simultanen Polarisation nicht direkt möglich.

Bei der Polarisationsumschaltung wird ein einzelner Sender zwischen den zwei Kanälen für die beiden orthogonal zueinander polarisierten Feldkomponenten hin- und hergeschaltet. Der Sender gibt die gesamte Leistung an einen Kanal, der einem Polarisationstor der Antenne zugeführt wird, wobei zwischen den beiden Kanälen von Puls zu Puls oder nach einer vorher festgelegten Pulszahl alternierend geschaltet wird. Als Hochleistungsschalter dient beispielsweise ein Ferritschalter oder ein mechanischer Schalter. Ferritschalter sind sehr teuer und anfällig. Die mechanischen Schalter müssen aufgrund der hohen Schaltgeschwindigkeit mit der Pulswiederholfrequenz des Wetterradars synchronisiert werden und funktionieren in der Regel nur, wenn zwischen aufeinanderfolgenden Umschaltungen mehrere Pulse abgestrahlt werden.

In A. Zahrai und Dr. Dusan Zmic, "Implementation of polarimetric capability for the WSR-88D (NEXRAD) Radar", Americal Meteorological Society, 13th Conference on IIPS, 1997, S. 284 wird beschrieben, daß ein mechanischer Hochleistungsschalter vorgesehen sein kann, mit dem es möglich ist, von der Aufteilung des Sendesignals für die Betriebsart der simultanen Polarisation auf lineare Polarisation umzuschalten.

Nachteilig dabei ist, daß der mechanische Hochleistungsschalter nicht in Echtzeit arbeitet und somit sehr langsam ist. Eine Korrelation zwischen der Rotationsgeschwindigkeit der Antenne des Wetterradars und dem Sender gestaltet sich schwierig.

In Schroth, Chandra, und Meischner, "A C-Band Coherent Polarimetric Radar for Propagation and Cloud Physics Research", American Meteorological Society, 1988, S. 803 wird ein Wetterradar beschrieben, bei dem mit einem auf Phasenmodulation basierenden Polarisations-Schaltnetzwerk der Sendepuls zwischen den Betriebsarten der simultanen Polarisation und der Polarisationsumschaltung umgeschaltet werden kann. Es sind zwei Signalwege mit jeweils einer Vorrichtung zur Modulation elektromagnetischer Pulse vorhanden, die unabhängig voneinander arbeiten. Die Korrelation der voneinander unabhängigen Vorrichtungen zur Erzeugung elektromagnetischer Pulse ist schwierig. Zudem wird die Phasenverschiebung an den Signalen mit hohem Leistungspegel durchgeführt, was den Aufbau erschwert.

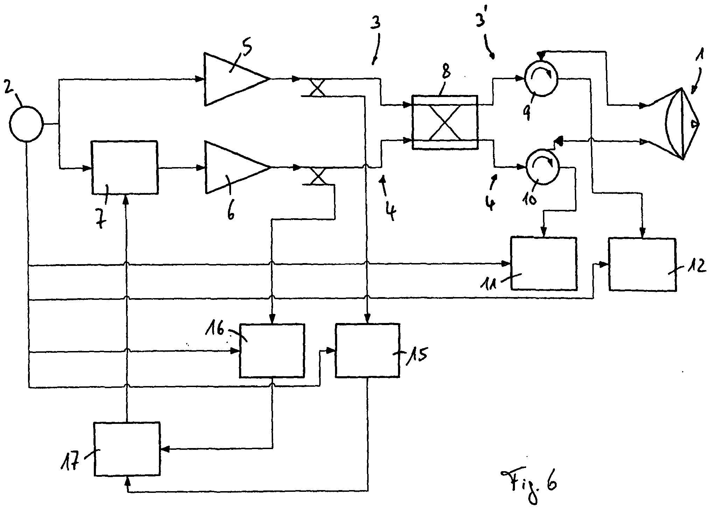

Aus Bringi, V.N., Chandrasekar, V., "Polarimetric Doppler Weather Radar", Cambridge University Press, Cambridge, UK, 2001, Seite 312, Fig. 6.11 ist ein polarisationsmodulierter Sender, insbesondere für ein Wetterradar, bekannt, bei dem für jede Polarisationskomponente ein Erzeuger für elektromagnetische Pulse vorgesehen ist, die über eine gemeinsame Antenne abgestrahlt und empfangen werden. Da die beiden Sendesignale von unterschiedlichen Sendeverstärkern erzeugt werden, sind sie in Bezug auf ihre Wellenform so stark dekorreliert, daß eine präzise Messung nicht mehr möglich ist. Weiterhin muß zur Abstrahlung alternierender Polarisationen der jeweils nicht benötigte Sender abgeschaltete werden.

US 3500460 beschreibt einen Mikrowellen-Polarisations-Schalter.

Aufgabe der Erfindung ist es daher, einen Sender nach dem Oberbegriff des Anspruchs 1 zu schaffen, der einfacher aufgebaut ist, die schnelle Umschaltung zwischen den Betriebsarten simultane und geschaltete Polarisation gestattet, eine gute Korrelation der polarisierten Pulse aufweist, die verfügbare Sendeleistung möglichst effizient ausnutzt und kostengünstig realisiert werden kann.

Diese Aufgabe wird durch die Merkmale des Anspruchs 1 gelöst.

Hierdurch wird ein polarisationsmodulierter Sender für ein Wetterradar geschaffen, in dem ein Hochfrequenzsignal über eine Schaltung mit mindestens zwei Signalwegen mit einer Antenne des Wetterradars verbunden ist und die Pulse auf die mindestens zwei Signalwege aufgeteilt werden. In den Signalwegen ist jeweils mindestens ein Senderverstärker angeordnet. In mindestens einem der Signalwege ist ein Phasenmodulator vor dem entsprechenden Senderverstärker des Signalweges vorgesehen, so daß der Phasenmodulator nur das Signal mit niedriger Leistung modulieren muß. Die elektromagnetischen Pulse werden mit einem die Signalwege koppelnden Koppler hinter den Senderverstärkern der beiden Signalwege verschränkt und dann der Antenne zugeführt. In den beiden Signalwegen wird durch die Kombination des dem Koppler vorgeschalteten Phasenmodulators in einem Signalweg das für die gewünschte Betriebsart notwendige Signal erzeugt, ohne daß komplizierte Schaltungen oder schnellansprechende Hochleistungsschalter oder eine Polarisation eines Signals auf hohem Pegel verwendet werden müssen. Der einfache Aufbau des Senders führt zu einer Modulation der Polarisation bei kleinen Leistungspegeln und hoher Korrelation aufgrund der additiven Überlagerung der beiden an den Eingängen des Kopplers anliegenden Sendeverstärker-Signale, so daß der Sender wesentlich einfacher und kostengünstiger zu realisieren ist. Das Signal jedes der Signalwege kann dann entsprechend polarisiert der Antenne zugeführt werden.

Bevorzugt ist das Hochfrequenzsignal durch einen Pulsmodulator den Signalwegen zuführbar. Damit ist eine einfache Art der Pulserzeugung möglich.

Als einfach zu realisierendes Element kann der Phasenmodulator bevorzugt ein Phasenschieber sein, der als schnell schaltender elektronischer oder mikroelektromechanisch geschalteter ("MEMS") Phasenschieber ausgebildet ist.

Vorzugsweise ist für einen weiteren einfachen Aufbau in Abhängigkeit von der Leitungsart der Koppler als magisches T ("magic T") oder Hybrid ("quadrature hybrid") bei Hohlleitern, als Verzweigungskoppler ("branch-line coupler") oder Ringkoppler ("hybrid ring", "rat-race coupler") bei Streifenleitern und als Verzweigungskoppler bei Koaxialleitungen ausgebildet.

Zur einfachen Ausgestaltung der Sendeverstärker können diese als Klystron, Kreuzfeldverstärker, Wanderfeldröhre, gittergesteuerte Röhre oder Transistorverstärker ausgestaltet sein. Mit diesen Sendeverstärkern ist eine Pulsmodulation einfach möglich, indem die Spannungsversorgung moduliert werden kann. Im Falle der Wanderfeldröhre, der gittergesteuerten Röhre oder dem Transistorverstärker ist eine Pulsmodulation über eine als Gitter ausgestaltete Elektrode möglich, mit der der Elektronenstrahl ein- bzw. ausgeschaltet werden kann.

Bevorzugt sind in den Signalwegen hinter den Sendeverstärkern einfache Richtungsleitungen, d.h. Isolatoren, vorgesehen, die die Sendeverstärker schützen, wenn die Isolation durch den Koppler nicht ausreichen sollte.

Vorzugsweise ist das Signal der Signalwege zu Empfängern auskoppelbar, die mit einem Prozessor verbunden sind, der zumindest einen in einem Signalweg vor dem Sendeverstärker angeordneten Vorverzerrer hinsichtlich der Vorverzerrung des Signals steuert. Hierdurch wird eine gute Qualität der Sendesignale erreicht, so daß die in den Koppler eingespeisten Signale eine hohe Korrelation aufweisen. Jedes Sendesignal kann als Testsignal ausgekoppelt, abgemischt und dem Prozessor zugeführt werden, der die optimale Vorverzerrung berechnet und einen entsprechenden Vorverzerrer in einem der Signalwege steuert. Das Signal beider Signalwege kann vorverzerrt werden, oder ein Signal eines Signalweges dient als Referenz, und nur das Signal des anderen Signalweges wird verzerrt. Es ist auch möglich, daß die Signale der beiden Signalwege zusätzlich oder auch nur hinter dem Koppler ausgekoppelt werden, um eventuelle Unsymmetrien des Kopplers durch die Vorverzerrung zu kompensieren.

Vorzugsweise können die ausgekoppelten Signale der beiden Signalwege durch eine Mischung korreliert werden. Je nach Mischertyp kann eines der beiden Signale der Signalwege auch noch über einen kalibrierten Phasenschieber verzögert werden, um das Ausgangssignal des Mischers zu maximieren.

Bevorzugt kann auch eine Korrelation über einen I/Q-Demodulator erfolgen, der eine Phasen- und Amplitudeninformation über einen komplexen Phasor als Ausgangssignal liefert. Auch der I/Q-Demodulator ist bevorzugt kalibriert.

Weitere Ausgestaltungen der Erfindung sind den Unteransprüchen und der nachfolgenden Beschreibung zu entnehmen.

Die Erfindung wird nachstehend anhand des in den beigefügten Abbildungen dargestellten Ausführungsbeispiels näher erläutert.

Fig. 1 zeigt schematisch ein Wetterradar mit einem ersten Ausführungsbeispiel eines Senders;

Fig. 2 zeigt schematisch ein Pulskompressionsradar mit dem Sender gemäß Fig. 1;
Fig. 3 zeigt schematisch ein frequenzmodulierte Dauerstrich-Radar mit dem Sender gemäß Fig. 1;
Fig. 4 zeigt schematisch einen Koppler aus Fig. 1, 2 und 3;
Fig. 5 zeigt schematisch ein Wetterradar mir einem zweiten Ausführungsbeispiel eines Senders;
Fig. 6 zeigt schematisch ein Wetterradar mir einem dritten Ausführungsbeispiel eines Senders;
Fig. 7 zeigt schematisch ein Wetterradar mit einem vierten Ausführungsbeispiel eines Senders;
Fig. 8 zeigt schematisch ein Wetterradar mit einem fünften Ausführungsbeispiel eines Senders.

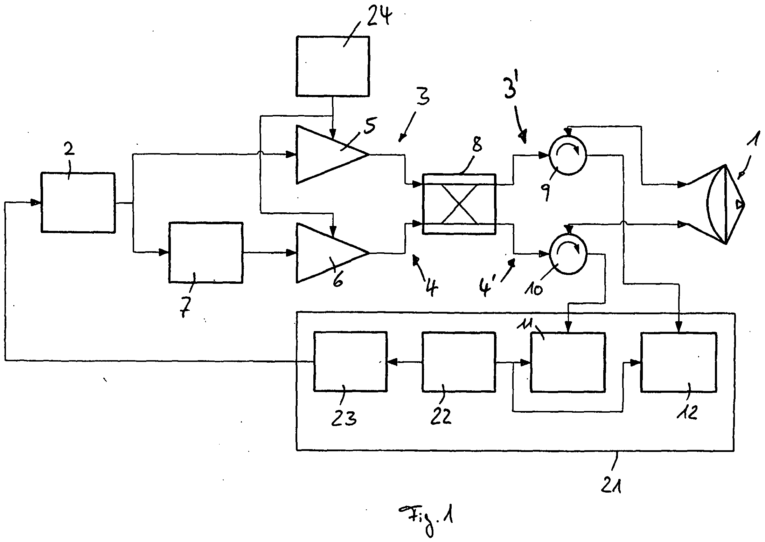

Fig. 1 zeigt ein Wetterradar mit einem ersten Ausführungsbeispiel eines polarisationsmodulierten Senders. Der Sender weist mindestens zwei Signalwege 3, 4 auf, denen das gleiche Hochfrequenzsignal vorzugsweise von einem Pulsmodulator 2 zuführbar ist. Jeder der Signalwege 3, 4 weist mindestens einen Sendeverstärker 5, 6 auf. Die Signalwege 3, 4 werden über einen Koppler 8 gekoppelt, so daß die am Koppler 8 eingehenden Pulse verschränkt werden. Zwischen der Antenne 1, die das Signal abstrahlt, und dem Pulsmodulator 2 sind die mindestens zwei Signalwege 3, 4 für eine unterschiedliche Polarisation der Signale vorgesehen. Vor dem Sendeverstärker 6, d.h. in Pulslaufrichtung dem Sendeverstärker 6 vorgeordnet, ist in dem Signalweg 4 ein Phasenmodulator 7 angeordnet. Die von dem Koppler 8 verschränkten Pulse sind Zirkulatoren 9, 10 zuführbar.

Die beiden Signalwege 3', 4' hinter dem Koppler 8 dienen der Polarisation der ausgestrahlten Welle durch die Antenne 1. Mit den Signalwegen 3', 4' ist der Antenne 1 für die Aussendung einer horizontal bzw. vertikal polarisierten Welle je ein Puls zuführbar. Der Erreger der Antenne 1 weist damit gleichsam zwei Tore auf, so dass die Polarisation mit dem Abstrahlen des Signals zustande kommt, und die Polarisation die Lage der elektrischen Feldkomponente relativ zum Erdboden angibt. Die Zirkulatoren 9, 10 dienen dazu, ein gesendetes bzw. abgestrahltes Signal von einem empfangenen Signal zu trennen.

Zudem ist in Fig. 1 eine Pulsmodulation durch einen Pulsmodulator 24 in den Signalwegen 3, 4 an den Sendeverstärkern 5, 6 vorgesehen.

Über die Antenne 1 werden auch elektromagnetische Pulse empfangen und über die Zirkulatoren 9, 10 an einen Empfänger 21 geleitet, der zwei Empfangskanäle 11, 12 für die empfangenen elektromagnetischen Pulse aufweist. Die empfangenen elektromagnetischen Pulse werden in Abhängigkeit des abgestrahlten Signals bzw. Pulses auswerten. Einer der Empfangskanäle 11, 12 wertet dabei die vertikalpolarisierte Komponente aus und der andere Empfangskanal 11, 12 die horizontalpolarisierte Komponente. Der Empfänger weist zudem mindestens einen Oszillator 22 auf, der mit den Empfangskanälen 11, 12 verbunden ist, und eine Vorrichtung zur Sendesignalerzeugung 23.

Falls nur ein Oszillator 22 vorgesehen ist, wird das Signal des Oszillators 22 zum Senden und Empfangen verwendet. Im Empfänger 21 wird durch die Abmischung der Träger komplett gelöscht, so daß unmittelbar die Information, das sogenannte Basisband, zur Verfügung steht. Ein derartiger Empfänger wird Homodyn-Empfänger genannt.

Bei einem Heterodyn-Empfänger wird ein Signal erst auf eine Zwischenfrequenz und dann ins Basisband umgesetzt, wofür mindestens zwei Oszillatoren 22 benötigt werden, der sogenannte stable local oscillator STALO und der coherent oscillator COHO). Hinsichtlich der Anzahl der Umsetzungen können ein Einfach-Umsetzer (single conversion receiver), bei dem nur eine Zwischenfrequenz verwendet wird und nur zwei Oszillatoren benötigt werden, und ein Zweifach-Umsetzer (dual conversion receiver), der mit zwei Zwischenfrequenzen arbeitet und drei Oszillatoren benötigt, unterschieden werden.

Bei dem Empfänger 21 kann auch ein digitaler Empfänger (digitales Backend) verwendet werden, bei dem die Zwischenfrequenz in einem Analog-Digital-Konverter digitalisiert und numerisch weiter verarbeitet wird. Dabei stellt die Clock des Analog-Digital-Konverters einen weiteren Oszillator dar, so daß für einen digitalen Zweifach-Umsetzer zwei analoge und die Clock des Analog-Digital-Konverters zur Konversion benötigt werden.

Bei der Vorrichtung zur Sendesignalerzeugung 23 werden die Oszillatoren 22 so gemischt, daß ein Signal mit der Sendefrequenz erzeugt wird, das dem Pulsmodulator 2 zugeführt wird.

Das den beiden Signalwegen 3, 4 in Fig. 1 über den Pulsmodulator 2 zugeführte Hochfrequenzsignal kann auch neben der dargestellten direkten Modulation in der Vorrichtung zur Sendesignalerzeugung 23 in Mischern moduliert werden, so daß das fertig gemischte Signal schon moduliert ist. Ferner kann die Hochfrequenz-Pulsmodulation durch Erzeugung eines hochzumischenden Zwischenfrequenzsignals mit einem Digital-Analog-Konverter durchgeführt werden, wobei das Zwischenfrequenzsignal pulsmoduliert ist. Eine Kombination aus den genannten Arten der Hochfrequenz-Pulsmodulation ist ebenso möglich.

Es ist auch möglich, eine Pulsmodulation des Senders durchzuführen, wobei die Spannungsversorgung einer Senderöhre bzw. eines Sendetransistors moduliert werden kann. Die Senderöhre kann auch über eine Elektrode, die meist als Gitter ausgestaltet ist, verfügen, über die der Elektronenstrahl ein- und ausgeschaltet werden kann. Analog dazu kann ein Sendetransistor auch durch Modulation seines Gates bzw. seiner Basis ein- und ausgeschaltet werden.

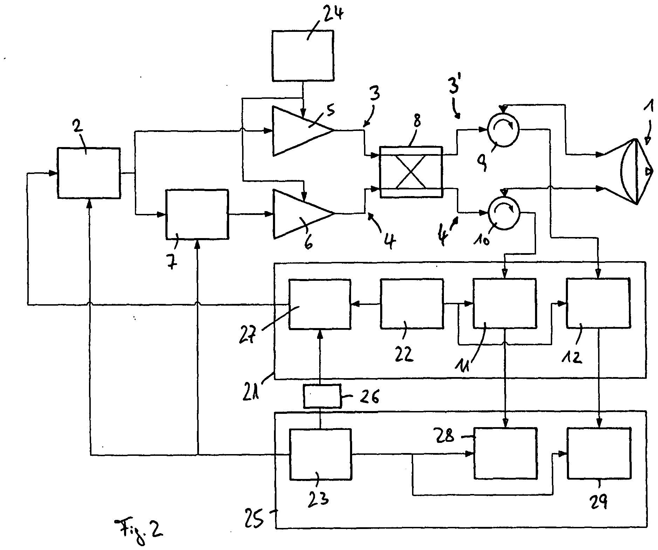

Bei einem in Fig. 2 schematisch dargestellten Pulskompressionsradar wird der Sendepuls moduliert. Die Modulation kann eine Phasen- oder eine Frequenzmodulation sein. Beispielsweise ist eine Frequenzrampe möglich, bei der die Sendefrequenz zu Beginn des Pulses mit einer niedrigen Frequenz startet und sich während des Pulses linear erhöht (lineare Frequenzmodulation). Der Aufbau des Senders des Radars entspricht dem aus Fig. 1. Im Unterschied zur Fig. 1 wird in einem Signalprozessor 25 ein Sendesignal in einer Vorrichtung zur Sendesignalerzeugung 23 erzeugt, das über einen Analog/Digitalkonverter 26 in eine analoge Aufwärts-Konversion 27 des Empfängers 21 eingespeist wird, die das Sendesignal auf die Sendefrequenz anhebt. Statt eines Analog/Digitalkonverters 26 kann auch ein digitaler Synthesizer zur Erzeugung des Sendesignals bzw. zur Einspeisung in die analoge Aufwärtskonversion 27 verwendet werden.

Das über die Antenne 1 empfangene Signal wird dem Signalprozessor 25 zur Auswertung über die beiden Empfangskanäle 11, 12 zugeführt, wobei im Signalprozessor 25 für jeden Empfangskanal 11, 12 ein Sendesignalkompressionsmittel 28, 29 vorgesehen ist. Das Sendesignalkompressionsmittel 28, 29 ist ferner mit der Vorrichtung zur Sendesignalerzeugung 23 verbunden und erhält von dieser jeweils das Sendesignal. Die beschriebene Modulation des Sendesignals ermöglicht es dem Signalprozessor 25, das zu einem bestimmten Zeitpunkt empfangene Signal eindeutig einer Raumzelle zuzuordnen. Außerdem werden sämtliche Anteile des Sendesignals, welches die Raumzelle passiert, kohärent aufintegriert, wodurch die Empfindlichkeit des Radars erheblich gesteigert wird.

Bei dem beschriebenen polarisationsmodulierten Pulskompressionsradar ist es denkbar, die Polarisation nicht nur von Puls zu Puls, sondern auch während des Pulses synchron mit der Phasen- oder Frequenzmodulation des Pulses zu modulieren, um so unterschiedliche Parameter bereits innerhalb einer Sende/Empfangssequenz, und nicht erst nach mehreren Sende/Empfangssequenzen zu erfassen.

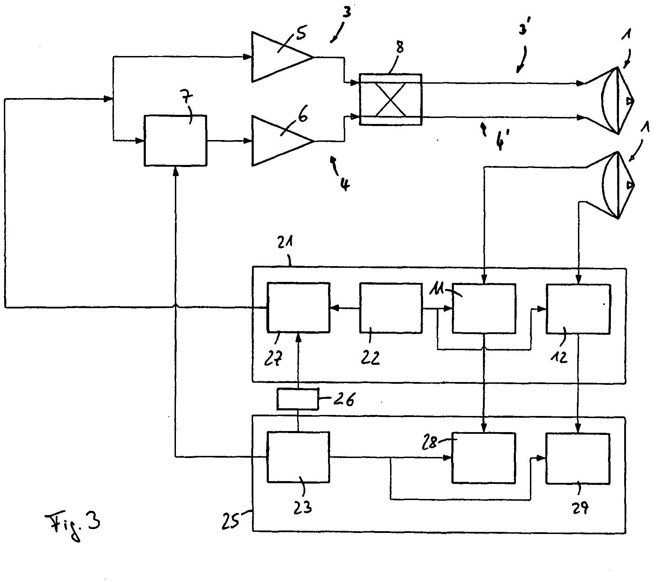

Eine Variante des Pulskompressionsradars nach Fig. 2 ist das in Fig. 3 schematisch dargestellte frequenzmodulierte Dauerstrich-Radar (FMCW, frequency modulated continuous wave). Beim FMCW-Radar entfallen der Sendepuls- und/oder der RF-Pulsmodulator. Der Sender strahlt permanent eine sich wiederholende Frequenzrampe ab. Da der Sender permanent arbeitet, werden keine Zirkulatoren zur Entkopplung von Sende- und Empfangssignal verwendet. Statt dessen arbeitet ein FMCW-Radar mit zwei Antennen 1, wobei die eine zum Senden und die andere zum Empfangen verwendet werden.

Auch hier ist es denkbar, die Polarisation nicht nur von Frequenzrampe zu Frequenzrampe, sondern auch während einer Rampe zu schalten.

Eine Kombination der Hochfrequenz-Pulsmodulation und der Pulsmodulation des Senders ist ebenfalls möglich.

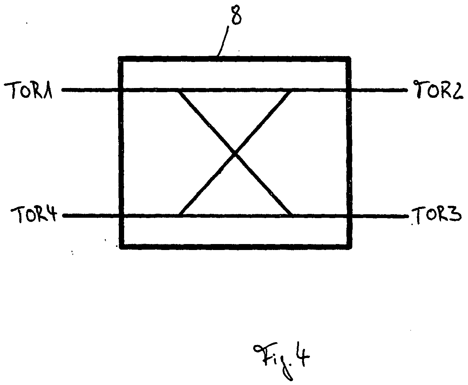

In Fig. 4 ist der Koppler 8 aus Fig. 1 mit den Toren TOR1, TOR2, TOR3, TOR4 näher dargestellt. Das Tor TOR1 ist das mit dem Sendeverstärker 5 im Signalweg 3 verbundene Eingangstor des Kopplers 8. Das Tor TOR4 ist das mit dem Sendeverstärker 6 im Signalweg 4 verbundene Eingangstor des Kopplers 8. Das Tor TOR2 ist das mit dem Zirkulator 9 verbundene Ausgangstor des Kopplers 8. Das Tor TOR3 ist das mit dem Zirkulator 10 verbundene Ausgangstor des Kopplers 8. Bei dem in Fig. 1 dargestellten Ausführungsbeispiel kann durch Einstellung der Phasenlage des Signals am Tor TOR3 bezogen auf die Phase des Signals am Tor TOR1 bei gleicher Amplitude des an den Toren TOR1 und TOR4 eingehenden Signals die Amplitude der Ausgangssignale an den Toren TOR2 und TOR3 eingestellt werden.

Beispielsweise können sich die Amplituden am Tor TOR2 konstruktiv und am Tor TOR3 destruktiv überlagern, so daß die gesamte Leistung beider Eingangssignale am Tor TOR2 abgegeben wird. Die gesamte Leistung wird dann im Signalweg 3 dem Zirkulator 9, der das Signal beispielsweise horizontal polarisiert, zugeführt, so daß eine horizontal polarisierte Welle der Antenne 1 zuführbar ist.

Auf die gleiche Art kann die gesamte Leistung auf Tor TOR3 gelegt werden. Die gesamte Leistung wird dann im Signalweg 5 dem Zirkulator 10, der das Signal beispielsweise vertikal polarisiert, zugeführt, so daß eine vertikal polarisierte Welle der Antenne 1 zuführbar ist.

Die Leistung kann auch gleichmäßig auf die Tore TOR2 und TOR3 aufgeteilt werden, so daß über die Zirkulatoren 9, 10 sowohl eine vertikal als auch eine horizontal polarisierte Welle der Antenne 1 gleichzeitig zuführbar ist.

Durch die Umschaltung des Phasenschiebers 7 sind die Betriebsarten simultane Polarisation und Polarisationsumschaltung realisierbar.

Die Bauweise des Kopplers hängt von der gewählten Leistungsart ab. Bei Hohlleitern können beispielsweise ein magisches T ("magic T") oder ein Hybrid ("quadrature hybrid") verwendet werden. Bei Streifenleitern können beispielsweise ein Verzweigungskoppler ("branch-line coupler") oder ein Ringkoppler ("hybrid ring", "rat-race coupler") verwendet werden. Bei Koaxialleitungen kann beispielsweise ein Verzweigungskoppler verwendet werden.

Mathematisch läßt sich der Koppler 8 am Beispiel des in Fig. 4 dargestellten Hybridkopplers durch seine Streumatrix beschreiben. Wellen, die in den Koppler 8 hineinlaufen, werden mit $a_i$ bezeichnet und Wellen, die den Hybridkoppler verlassen, werden mit $b_i$ bezeichnet. Es gilt:

$$a_i = \underline{U}_{ein,i} \big/ \sqrt{Z_L}$$

$$a_i = \underline{U}_{aus,i} / \sqrt{Z_L}$$

$Z_L$ ist die Leitungsimpedanz. Die ein- und auslaufenden Wellen $\underline{U}_{ein,i}$, $\underline{U}_{aus,i}$ werden auch als (impedanz-)normierte Wellen bezeichnet. Der Unterstrich zeigt, daß es sich um komplexe Variablen handelt. In Matrixschreibweise ergibt sich

$$\underline{b} = \underline{S} \cdot \underline{a}$$

$\underline{S}$ ist die Streumatrix. Die Streumatrix eines 90°-Hybrids (3dB-Koppler, "quadrature hybrid") ist:

$$\underline{S}_{QH} = \frac{1}{\sqrt{2}} \begin{pmatrix} 0 & -j & -1 & 0 \\ -j & 0 & 0 & -1 \\ -1 & 0 & 0 & -j \\ 0 & -1 & -j & 0 \end{pmatrix}$$

Der Begriff 90°-Hybrid leitet sich von dem Verhalten des Kopplers ab, wenn nur ein Signal am Tor TOR1 eingespeist wird. Das Signal an Tor TOR1 wird dann auf die Tore TOR2 und TOR3 aufgeteilt, wobei die Phasenverschiebung der beiden auslaufenden Wellen an den Toren TOR2 und TOR4 90° beträgt.

Bei dem in Fig. 4 dargestellten Koppler 8 werden nur an den Toren TOR1 und TOR3 Wellen eingespeist, die von den beiden Sendeverstärkern 5, 6 kommen:

$$\underline{a} = \begin{pmatrix} \underline{a}_1 \\ 0 \\ 0 \\ \underline{a}_4 \end{pmatrix}$$

Die an den Toren TOR2 und TOR3 ausgehenden Wellen ergeben sich zu:

$$b_2 = \left( -j\underline{a}_1 \quad -\underline{a}_4 \right) / \sqrt{2}$$

$$b_3 = \left( -\underline{a}_1 \quad -j\underline{a}_4 \right) / \sqrt{2}$$

Drei Betriebsarten können aufgrund unterschiedlicher Amplitude und Phase der Signale an den Toren TOR 1 und TOR4 unterschieden werden.

Bei der ersten Betriebsart haben die an den Toren TOR1 und TOR4 anliegenden Signale die gleiche Amplitude und Phase, so daß $\alpha_1 = \alpha_4$. Dann ergibt sich:

$$b_2 = (-a_1)(j+1)/\sqrt{2}$$

$$b_3 = (-a_1)(1+j)/\sqrt{2}$$

An den Toren TOR2 und TOR3 gehen somit von dem Koppler 8 zwei Wellen mit gleicher Amplitude und gleicher Phase aus.

Bei der zweiten Betriebsart haben die an den Toren TOR1 und TOR4 anliegenden Signale die gleiche Amplitude, aber einen Phasenunterschied von 90°, so daß $a_4 = j\, a_1$. Dann ergibt sich:

$$b_2 = (-2ja_1)/\sqrt{2}$$

$$b_3 = 0$$

Die Amplitude des Signals an Tor TOR2 verdoppelt sich, wohingegen an Tor TOR3 kein Signal abgegeben wird.

Bei der dritten Betriebsart haben die an den Toren TOR1 und TOR4 anliegenden Signale die gleiche Amplitude, aber einen Phasenunterschied von -90° (oder 270°), so daß $a_4 = -j\, a_1$. Dann ergibt sich:

$$b_2 = 0$$

$$b_3 = (-2ja_1)/\sqrt{2}$$

Die Amplitude des Signals an Tor TOR3 verdoppelt sich, wohingegen am Tor TOR2 kein Signal abgegeben wird.

Es ist somit möglich, in Abhängigkeit von der Phasenlage der beiden an den Toren TOR1 und TOR4 anliegenden Signale, die Leistung aufzuteilen oder zwischen den zwei Toren TOR2 und TOR3 hin- und herzuschalten. Bei einem als magischen T ausgestalteten Koppler 8 ergeben sich ähnliche Bedingungen, wobei das magische T ein 180°-Hybrid ist, und sich in der Streumatrix unterscheidet.

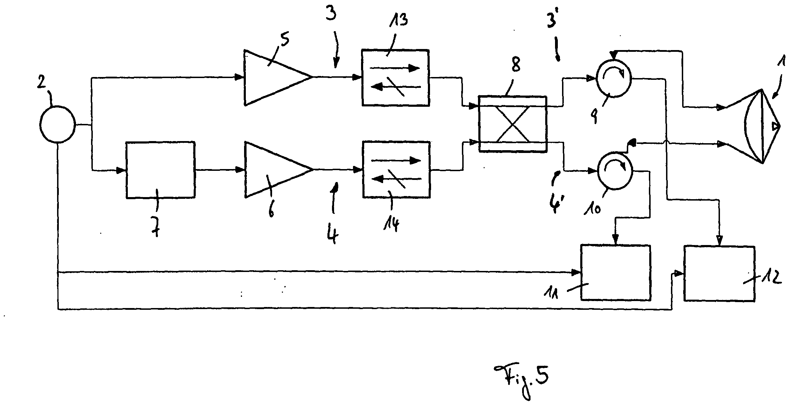

Bei dem in Fig. 5 dargestellten Ausführungsbeispiel ist zwischen den Sendeverstärkern 5, 6 und dem Koppler 8 jeweils in den Signalwegen 3, 4 ein Isolator 13 bzw. 14 angeordnet, durch die die Sendeverstärker 5, 6 geschützt sind. Die Isolatoren 13, 14 können als einfache Richtungsleitungen ausgestaltet sein. Aus Gründen der Einfachheit sind in Fig. 5 die Vorrichtung zur Sendesignalerzeugung 23 und der bzw. die Oszillatoren 23 nicht dargestellt. Das in Fig. 5 dargestellte Ausführungsbeispiel kann aber insoweit dem in Fig. 1 dargestellten Ausführungsbeispiel entsprechen. Die Verwendung des erfindungsgemäßen Senders in einem in Fig. 2 bzw: 3 dargestellten polarisationsmodulierten Pulskompressionsradar bzw. FMCW-Radar ist ebenfalls möglich.

Bei dem in Fig. 6 dargestellten Ausführungsbeispiel wird eine gute Qualität der Sendesignale dadurch erreicht, daß die in den Koppler 8 eingespeisten Signale bereits eine hohe Korrelation aufweisen. Dies wird dadurch erreicht, daß aus jedem Signalweg 3, 4 ein Testsignal ausgekoppelt wird. Das ausgekoppelte Testsignal wird abgemischt über je einen Empfänger 15, 16 einem Prozessor 17 zugeführt, der eine optimale Vorverzerrung berechnet. Der Prozessor 17 ist mit einem zusammen mit dem Phasenmodulator 7 ausgestalteten Vorverzerrer verbunden und steuert diesen. Alternativ kann der Vorverzerrer getrennt von dem Phasenmodulator ausgestaltet sein. Die Empfänger 15, 16 sind mit dem Erzeuger 2 verbunden und empfangen ein Erzeuger-Ausgangssignal als Referenz und vergleichen das von den Signalwegen 3, 4 ausgekoppelte Signal mit der Referenz, so daß der Prozessor 17 auf Grundlage des Vergleichs den Vorverzerrer steuert. Alternativ kann vorgesehen sein, daß die Signale der Signalwege 3, 4 hinter dem Koppler 8 ausgekoppelt werden, um eventuelle Unsymmetrien des Kopplers 8 durch die Steuerung der Vorverzerrung zu kompensieren. Ebenfalls möglich ist die Auskopplung von Testsignalen sowohl vor als auch hinter dem Koppler. Aus Gründen der Einfachheit sind in Fig. 6 die Vorrichtung zur Sendesignalerzeugung 23 und der bzw. die Oszillatoren 23 nicht dargestellt. Das in Fig. 6 dargestellte Ausführungsbeispiel kann aber insoweit dem in Fig. 1 dargestellten Ausführungsbeispiel entsprechen. Die Verwendung des erfindungsgemäßen Senders in einem in Fig. 2 bzw. 3 dargestellten polarisationsmodulierten Pulskompressionsradar bzw. FMCW-Radar ist ebenfalls möglich.

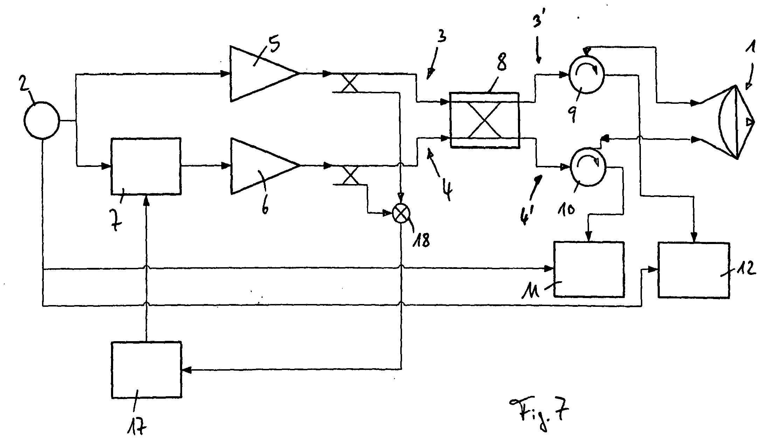

Bei dem in Fig. 7 dargestellten Ausführungsbeispiel wird die Korrelation der beiden Signale in den Signalwegen 3, 4 dadurch erreicht, daß die ausgekoppelten Signale in einem Mischer 18 gemischt und dem Prozessor 17 zugeführt werden, um den Vorverzerrer zu steuern. Je nach Typ des Mischers 18 kann eines der beiden Signale aus den Signalwegen noch über einen kalibrierten Phasenschieber verzögert werden, um das Ausgangssignal des Mischers 18 zu maximieren. Auch hier kann wieder vorgesehen sein, daß die Signale der Signalwege hinter dem Koppler 8 ausgekoppelt werden, um eventuelle Unsymmetrien des Kopplers 8 durch die Steuerung der Vorverzerrung zu kompensieren. Aus Gründen der Einfachheit sind in Fig. 7 die Vorrichtung zur Sendesignalerzeugung 23 und der bzw. die Oszillatoren 23 nicht dargestellt. Das in Fig. 7 dargestellte Ausführungsbeispiel kann aber insoweit dem in Fig. 1 dargestellten Ausführungsbeispiel entsprechen. Die Verwendung des erfindungsgemäßen Senders in einem in Fig. 2 bzw. 3 dargestellten polarisationsmodulierten Pulskompressionsradar bzw. FMCW-Radar ist ebenfalls möglich.

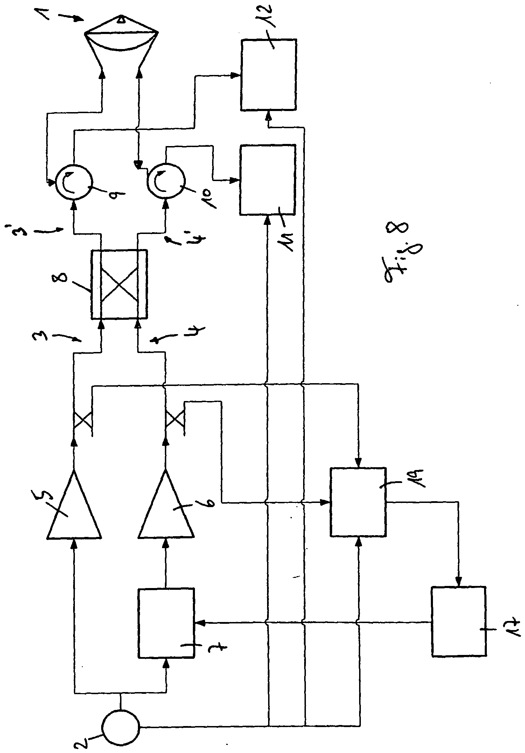

In Fig. 8 ist ein Ausführungsbeispiel dargestellt, bei dem die Korrelation der beiden Signale in den Signalwegen 3, 4 über einen I/Q-Demodulator 19 erreicht wird, dem die ausgekoppelten Signale der Signalwege 3, 4 zugeführt werden. Der I/Q-Demodulator 19 liefert die Phasen- und Amplitudeninformation über einen komplexen Phasor als Ausgangssignal an den Prozessor 17, der den Vorverzerrer steuert. Der I/Q-Demodulator 19 empfängt für die Auswertung der Phasen- und Amplitudeninformation von dem Erzeuger 2 ein Referenzsignal. Vorzugsweise ist der I/Q-Demodulator kalibriert. Aus Gründen der Einfachheit sind in Fig. 8 die Vorrichtung zur Sendesignalerzeugung 23 und der bzw. die Oszillatoren 23 nicht dargestellt. Das in Fig. 8 dargestellte Ausführungsbeispiel kann aber insoweit dem in Fig. 1 dargestellten Ausführungsbeispiel entsprechen. Die Verwendung des erfindungsgemäßen Senders in einem in Fig. 2 bzw. 3 dargestellten polarisationsmodulierten Pulskompressionsradar bzw. FMCW-Radar ist ebenfalls möglich.

### Patentansprüche

1. Polarisationsmodulierter Sender für ein Wetterradar, mit einer Antenne (1), mindestens zwei Signalwegen (3, 4), denen das gleiche Hochfrequenzsignal zugeführt wird einem Phasenmodulator (7) für eine Phasenmodulation in einem der mindestens zwei Signalwege (3, 4) und einen Koppler (8), an den die Signalwege (3, 4) angeschlossen sind und dessen Ausgänge mit der Antenne (1) verbunden sind, wobei der Phasenmodulator für eine Polarisationsmodulation des über die Antenne (1) abzustrahlenden Signals vorgesehen ist, **dadurch gekennzeichnet, daß** in jedem Signalweg (3, 4) je ein Sendeverstärker (5, 6) angeordnet ist, und daß das Hochfrequenzsignal zunächst vom Phasenmodulator (7) in einem der Signalwege (3,4) phasenmoduliert wird und danach in den Sendeverstärkern (5, 6) verstärkt wird, und danach dem Koppler (8) zugeführt wird.

2. Sender nach Anspruch 1, **dadurch gekennzeichnet, daß** das Hochfrequenzsignal durch einen Pulsmodulator (2) zugeführt wird.

3. Sender nach Anspruch 1 oder 2, **dadurch gekennzeichnet, daß** der Phasenmodulator (7) ein Phasenschieber ist.

4. Sender nach einem der Ansprüche 1 bis 3, **dadurch gekennzeichnet, daß** der Koppler (8) ein magisches T oder ein Hybrid ist.

5. Sender nach einem der Ansprüche 1 bis 3, **dadurch gekennzeichnet, daß** der Koppler (8) ein Verzweigungskoppler oder ein Ringkoppler ist.

6. Sender nach einem der Ansprüche 1 bis 5, **dadurch gekennzeichnet, daß** die Sendeverstärker (5, 6) als Klystron, Kreuzfeldverstärker, Wanderfeldröhre, gittergesteuerte Röhre oder Transistorverstärker ausgestaltet sind.

7. Sender nach einem der Ansprüche 1 bis 6, **dadurch gekennzeichnet, daß** zwischen den Sendeverstärkern (5, 6) und dem Koppler (8) in den Signalwegen (3, 4) jeweils ein Isolator (13, 14) angeordnet ist.

8. Sender nach einem der Ansprüche 1 bis 7, **dadurch gekennzeichnet, daß** das Signal der Signalwege (3, 4) zu Empfängern (15, 16) ausgekoppelt wird, die mit einem Prozessor (17) verbunden sind, mit dem zumindest ein in einem Signalweg (3, 4) vor dem Sendeverstärker (5, 6) angeordneter Vorverzerrer hinsichtlich der Vorverzerrung und der Phasenmodulator (7) hinsichtlich der Phasenmodulation eines der Signale der Signalwege (3, 4) gesteuert wird.

9. Sender nach Anspruch 8, **dadurch gekennzeichnet, daß** die Empfänger (15, 16) jeweils mit dem Pulsmodulator (2) zum Empfang eines Referenzsignals gekoppelt sind.

10. Sender nach Anspruch 8 oder 9, **dadurch gekennzeichnet, daß** ein Mischer (18) vorgesehen ist, der zwischen den beiden Signalwegen (3, 4) und dem Prozessor (13) gekoppelt ist zur Steuerung des Vorverzerrers und des Phasenmodulators (7) in Abhängigkeit vom gemischten Signal.

11. Sender nach Anspruch 8 oder 9, **dadurch gekennzeichnet, daß** ein I/Q-Demodulator (19) zur Erlangung der Phasen- und Amplitudeninformation der Signale der Signalwege (3, 4) vorgesehen ist, der zwischen den beiden Signalwegen (3, 4) und dem Prozessor (17) gekoppelt ist zur Steuerung des Vorverzerrers und des Phasenmodulators (7).

**Claims**

1. Polarization modulated transmitter for a weather radar, with an antenna (1), at least two signal paths (3, 4) to which the same radio frequency signal is fed, a phase modulator (7) for a phase modulation in one of the at least two signal paths (3, 4), and a coupler (8) to which the signal paths (3, 4) are connected and whose outputs are connected to the antenna (1), the phase modulator being provided for a polarization modulation of the signal to be emitted via the antenna (1), **characterized in that** a transmit amplifier (5, 6) is respectively arranged in each signal path (3, 4), and **in that** the radio frequency signal is first phase-modulated by the phase modulator (7) in one of the signal paths (3, 4), and then amplified in the transmit amplifiers (5, 6) and then fed to the coupler (8).

2. Transmitter according to Claim 1, **characterized in that** the radio frequency signal is fed by a pulse modulator (2).

3. Transmitter according to Claim 1 or 2, **characterized in that** the phase modulator (7) is a phase shifter.

4. Transmitter according to one of Claims 1 to 3, **characterized in that** the coupler (8) is a magic T or a hybrid.

5. Transmitter according to one of Claims 1 to 3, **characterized in that** the coupler (8) is a branch-line coupler or a hybrid ring coupler.

6. Transmitter according to one of Claims 1 to 5, **characterized in that** the transmit amplifiers (5, 6) are designed as a klystron, crossed field amplifier, traveling field tube, grid-controlled tube or transistor amplifier.

7. Transmitter according to one of Claims 1 to 6, **characterized in that** an isolator (13, 14) is respectively arranged between the transmit amplifiers (5, 6) and the coupler (8) in the signal paths (3, 4).

8. Transmitter according to one of Claims 1 to 7, **characterized in that** the signal of the signal paths (3, 4) is decoupled to receivers (15, 16) that are connected to a processor (17) that is used to control at least one predistorter, arranged in a signal path (3, 4) upstream of the transmit amplifier (5, 6), with regard to the predistortion, and the phase modulator (7) with regard to the phase modulation of one of the signals of the signal paths (3, 4).

9. Transmitter according to Claim 8, **characterized in that** the receivers (15, 16) are respectively coupled to the pulse modulator (2) in order to receive a reference signal.

10. Transmitter according to Claim 8 or 9, **characterized in that** a mixer (18) that is coupled between the two signal paths (3, 4) and the processor (13) is provided in order to control the predistorter and the phase modulator (7) as a function of the mixed signal.

11. Transmitter according to Claim 8 or 9, **characterized in that** there is provided for obtaining the phase and amplitude information of the signals of the signal paths (3, 4) an I/Q demodulator (19) that is coupled between the two signal paths (3, 4) and the processor (17) in order to control the predistorter and the phase modulator (7).

**Revendications**

1. Emetteur modulé en polarisation pour un radar météorologique, avec une antenne (1), au moins deux circuits (3 ; 4), auxquels le même signal haute fréquence est transmis, un modulateur de phase (7) pour une modulation de phase dans un desdits au moins deux circuits (3 ; 4), et un coupleur (8) auquel sont connectés lesdits circuits (3 ; 4), et dont les sorties sont reliées à ladite antenne (1), où ledit modulateur de phase est prévu pour une modulation de polarisation du signal émis sur ladite antenne (1), **caractérisé en ce que** dans chaque dit circuit (3 ; 4) est agencé un amplificateur d'émission (5 ; 6), et que le signal haute fréquence est d'abord modulé en phase par ledit modulateur de phase (7) dans un desdits circuits (3 ; 4), et est ensuite amplifié dans lesdits amplificateurs (5 ; 6), puis est délivré audit coupleur (8).

2. Emetteur selon la revendication 1, **caractérisé en ce que** ledit signal haute fréquence est alimenté au travers d'un modulateur d'impulsions (2).

3. Emetteur selon la revendication 1 ou 2, **caractérisé en ce que** ledit modulateur de phase (7) est un déphaseur.

4. Emetteur selon l'une des revendications 1 à 3, **caractérisé en ce que** ledit coupleur (8) est un hybride ou une jonction hybride.

5. Emetteur selon l'une des revendications 1 à 3, **caractérisé en ce que** ledit coupleur (8) est un coupleur de branchement ou un coupleur en anneau.

6. Emetteur selon l'une des revendications 1 à 5, **caractérisé en ce que** lesdits amplificateurs d'émission (5 ; 6) font fonction de klystron, ou amplificateur à champ croisé, ou tube à ondes progressives, ou tube commandé par grille, ou amplificateur à transistor.

7. Emetteur selon l'une des revendications 1 à 6, **caractérisé en ce qu'**un isolateur (13 ; 14) est systématiquement disposé entre lesdits amplificateurs d'émission (5 ; 6) et ledit coupleur (8) , dans lesdits circuits (3 ; 4)

8. Emetteur selon l'une des revendications 1 à 7, **caractérisé en ce que** le signal desdits circuits (3 ; 4) est déclenché à l'arrivée sur des récepteurs (15 ; 16) qui sont liés à un processeur (17), avec lequel au moins un préaccentuateur disposé dans un dit circuit (3 ; 4) devant ledit amplificateur d'émission (5 ; 6) est piloté par rapport à la prédistorsion et par rapport audit modulateur de phase (7) relatif à la modulation de phase de l'un des signaux desdits circuits (3 ; 4).

9. Emetteur selon la revendication 8, **caractérisé en ce que** lesdits récepteurs (15 ; 16) sont chacun couplé avec ledit modulateur d'impulsions (2) pour la réception d'un signal de référence.

10. Emetteur selon la revendication 8 ou 9, **caractérisé en ce qu'**un mélangeur (18) est prévu couplé entre lesdits deux circuits (3 ; 4) et ledit processeur (13) pour le pilotage dudit préaccentuateur et dudit modulateur de phase (7) en dépendance du signal mixé.

11. Emetteur selon la revendication 8 ou 9, **caractérisé en ce qu'**un démodulateur I/Q (19) est prévu pour l'obtention de l'information de phase et d'amplitude des signaux desdits circuits (3 ; 4) est prévu couplé entre lesdits deux circuits (3 ; 4) et ledit processeur (17) pour le pilotage dudit préaccentuateur et dudit modulateur de phase (7).

Fig. 1

Fig. 2

Fig. 3

TOR2

TOR3

TOR1

TOR4

8

Fig. 4

Fig. 5

Fig. 6

Fig. 7

EP 2 033 014 B1

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3500460 A

### In der Beschreibung aufgeführte Nicht-Patentliteratur

- **A. ZAHRAI ; DR. DUSAN ZMIC.** Implementation of polarimetric capability for the WSR-88D (NEXRAD) Radar. *Americal Meteorological Society, 13th Conference on IIPS,* 1997, 284

- **SCHROTH ; CHANDRA ; MEISCHNER.** A C-Band Coherent Polarimetric Radar for Propagation and Cloud Physics Research. *American Meteorological Society,* 1988, 803
- **BRINGI, V.N. ; CHANDRASEKAR, V.** Polarimetric Doppler Weather Radar. Cambridge University Press, 2001, 312